# FASCICULE DE BREVET EUROPEEN

(11) **EP 1 541 915 B1**
(45) Date de publication et mention de la délivrance du brevet: **02.12.2015**
(21) Numéro de dépôt: 04292908.3
(22) Date de dépôt: 07.12.2004
(51) Int. Cl.: F16L 21/06, F16L 21/08

(54) **Dispositif de verrouillage du raccordement d'éléments de canalisation et procédé de mise en place corrspondant**
Vorrichtung zum Verbinden von Leitungselementen und entsprechendes Verbindungsverfahren
Device for the connection of conduit elements and corresponding methof for connecting the same

(30) Priorité: 08.12.2003 FR 0314353; 19.03.2004 FR 0402899
(43) Date de publication de la demande: 15.06.2005
(73) Titulaire: Bayard S.A., 69881 Meyzieu Cedex (FR)
(72) Inventeur: Philippe, Patrice Daniel Maurice, 69740 Genas (FR)
(74) Mandataire: Martin, Didier Roland Valéry

(56) Documents cités:
- DE-C- 939 182
- DE-C1- 4 422 116
- US-A- 4 215 883
- US-A- 5 018 768
- US-A- 5 647 612

## Description

La présente invention se rapporte au domaine technique général des dispositifs de verrouillage destinés à assurer le verrouillage du raccordement d'éléments de canalisation, notamment des éléments de canalisation dits « *à emboîtement ».*

La présente invention concerne un dispositif de verrouillage pour le raccordement d'éléments de canalisation, destiné à être monté à la jonction entre un élément de canalisation amont, dit élément amont, et un élément de canalisation aval, dit élément aval, l'élément amont étant pourvu d'un relief destiné à former une butée à l'encontre du dispositif de verrouillage, ledit dispositif comportant :
- un premier demi-collier,
- un deuxième demi-collier, destiné à être associé au premier demi-collier de manière à former un collier autour de ladite jonction, au moins une partie dudit collier ainsi formé venant en appui contre le relief, le premier et le deuxième demi-colliers comportant des moyens d'accrochage mutuel automatique.

L'invention concerne également un procédé de mise en place d'un dispositif de verrouillage pour le raccordement d'éléments de canalisation pourvu d'un premier et un deuxième demi-colliers comportant des moyens d'accrochage mutuel automatique, dans lequel on positionne un premier demi-collier à la jonction entre un élément de canalisation amont, pourvu d'un relief destiné à former une butée à l'encontre du dispositif, et un élément de canalisation aval, de telle sorte qu'au moins une partie dudit premier demi-collier vienne en appui contre le relief.

Pour raccorder deux extrémités de canalisations, on dispose généralement de plusieurs moyens parmi lesquels on distingue les colliers d'ancrage. Ces colliers sont tout particulièrement utilisés pour joindre deux éléments de canalisation, par exemple un tube ou un tuyau dit amont, c'est-à-dire situé en amont de la jonction en considération d'une direction donnée, et un tuyau dit aval, c'est-à-dire situé en aval de la jonction entre les deux éléments de canalisation.

Bien évidemment, les qualificatifs *« amont* » et « *aval* » ne sont donnés qu'à titre illustratif et à des fins purement descriptives, le fluide pouvant s'écouler indifféremment dans les deux sens au niveau de la jonction. Le tuyau dit *« amont* » peut ainsi être alternativement un tuyau dit « *aval* » ou « *amont* » au sens de l'invention.

Le tuyau aval se présente généralement sous la forme d'un tube sensiblement lisse.

Le tuyau amont comporte quant à lui généralement un bossage annulaire, recouvrant un logement destiné à recevoir un joint d'étanchéité. Le tuyau aval vient s'emboîter dans le tuyau amont qui forme alors un manchon, et l'étanchéité est réalisée à l'aide du joint sus-mentionné, qui vient s'écraser entre la paroi externe du tuyau aval et la paroi interne du tuyau amont. Pour cette raison, ces tuyaux sont généralement dits « *à emboîtement* ».

Avec ce type de raccordement, les éléments de canalisation dit amont et dit aval, lorsqu'ils sont accouplés, ne sont toutefois pas verrouillés entre eux, de telle sorte que sous l'effet de la pression hydraulique s'exerçant, le tuyau dit aval peut se déboîter. L'étanchéité est alors rompue au niveau de la jonction, ce qui peut entraîner des fuites importantes de fluide.

Les colliers de branchement permettent donc de pallier cet inconvénient et se présentent généralement sous la forme de deux demi-colliers destinés à être assemblés au niveau de la jonction pour former un collier unique de verrouillage.

Le document US 5.018.768 divulgue un dispositif de verrouillage de ce genre.

Une partie du collier ainsi formé vient en butée contre le bossage annulaire du tuyau dit amont, retenant ainsi la poussée hydraulique, et une autre partie du collier vient généralement s'ancrer dans le tuyau dit aval pour le retenir.

De tels colliers sont largement connus et, s'ils fournissent des résultats intéressants en matière de verrouillage, ils soufrent néanmoins d'inconvénients non négligeables.

En particulier, la mise en place de tels colliers est généralement longue et difficile.

Ainsi, le montage des colliers s'effectue généralement de la façon suivante.

Un premier demi-collier est monté à la jonction entre les deux éléments de canalisation à raccorder puis, tout en maintenant ce demi-collier en position, on vient mettre en regard de ce premier demi-collier le deuxième demi-collier en vue de les assembler.

Or, l'assemblage est souvent réalisé à l'aide de vis et boulons que l'on introduit dans des ouvertures ménagées à cet effet sur chacun des deux demi-colliers.

Dès lors, pour installer les vis, il est nécessaire de positionner parfaitement les deux demi-colliers en vis-à-vis l'un de l'autre, ce qui constitue déjà une première source de difficulté d'autant plus que les portions de canalisation où de tels colliers doivent être mis en place sont souvent d'accès difficile.

L'opérateur chargé du montage de ces colliers sur la canalisation est donc souvent contraint d'effectuer de nombreuses manipulations et de mettre en oeuvre une gestuelle complexe pour les mettre en place.

Ainsi, avant leur assemblage définitif à l'aide de vis, les deux demi-colliers doivent être maintenus en regard l'un de l'autre, un tel maintien nécessitant généralement l'utilisation des deux mains de l'opérateur, chaque main assurant le maintien d'un demi-collier.

Tout en maintenant les deux demi-colliers en vis-à-vis, l'opérateur doit simultanément introduire les vis de fixation dans les ouvertures prévues à cet effet de manière à verrouiller le dispositif. Or, la rigidité, le manque de jeu et de souplesse de tels colliers contribuent souvent à compliquer la tâche de l'opérateur et à allonger le temps de mise en place.

Il est également connu d'utiliser d'autres pièces de fixation, telles que des coins destinés à être emmanchés longitudinalement sur les demi-colliers pour les assembler. Cependant, l'utilisation de ces coins souffre souvent du fait que leur montage nécessite de les frapper pour les emmancher alors que les deux demi-colliers sont encore relativement libres sur les tuyaux. L'opérateur doit alors maintenir fermement les deux demi-colliers en regard l'un de l'autre tout en frappant les pièces de fixation.

En outre, de tels colliers, en raison de l'utilisation de nombreuses pièces de fixation, du genre boulons ou coins, ont généralement un coût de fabrication élevé.

Les objets assignés à l'invention visent en conséquence à porter remède aux différents inconvénients énumérés précédemment et à proposer un nouveau dispositif de verrouillage pour le raccordement d'éléments de canalisation dont la manipulation est particulièrement simplifiée et rapide.

Un autre objet de l'invention vise à proposer un nouveau dispositif de verrouillage susceptible d'être utilisé dans des endroits d'accès difficile.

Un autre objet de l'invention vise à proposer un nouveau dispositif de verrouillage ne nécessitant qu'un nombre réduit de pièces pour sa mise en place.

Un autre objet de l'invention vise à proposer un nouveau dispositif de verrouillage présentant une bonne résistance mécanique et dont la fabrication est simple et présente un coût limité.

Les objets assignés à l'invention visent également à proposer un nouveau procédé de mise en place d'un dispositif de verrouillage qui soit particulièrement simple et rapide à mettre en oeuvre, tout en permettant d'obtenir un verrouillage efficace du raccordement entre deux éléments de canalisation.

Les objets assignés à l'invention sont atteints à l'aide d'un dispositif de verrouillage pour le raccordement d'éléments de canalisation, destiné à être monté à la jonction entre un élément de canalisation amont, dit élément amont, et un élément de canalisation aval, dit élément aval, l'élément amont étant pourvu d'un relief destiné à former une butée à l'encontre du dispositif de verrouillage, ledit dispositif comportant :
- un premier demi-collier,
- un deuxième demi-collier, destiné à être associé au premier demi-collier de manière à former un collier autour de ladite jonction, au moins une partie dudit collier ainsi formé venant en appui contre le relief, le premier et le deuxième demi-colliers comportant des moyens d'accrochage mutuel automatique,
caractérisé en ce que les moyens d'accrochage sont conformés et disposés de manière à permettre l'accrochage du deuxième demi-collier sur le premier demi-collier à l'arrière du relief, en déplaçant le deuxième demi-collier de l'amont vers l'aval.

Les objets assignés à l'invention sont également atteints à l'aide d'un procédé de mise en place d'un dispositif de verrouillage pour le raccordement d'éléments de canalisation pourvu d'un premier et un deuxième demi-colliers comportant des moyens d'accrochage mutuel automatique, dans lequel on positionne et on fait reposer le premier demi-collier à la jonction entre un élément de canalisation amont, pourvu d'un relief destiné à former une butée à l'encontre du dispositif, et un élément de canalisation aval, de telle sorte qu'au moins une partie dudit premier demi-collier vienne en appui contre le relief, ledit procédé étant caractérisé en ce qu'il comporte les étapes suivantes :
- présenter l'extrémité amont du deuxième demi-collier sensiblement en amont du relief,
- positionner le deuxième demi-collier en regard du premier demi-collier à la jonction en le déplaçant de l'amont vers l'aval tout en accrochant, par l'intermédiaire des moyens d'accrochage mutuel automatique, le deuxième demi-collier sur le premier demi-collier à l'arrière du relief, de telle manière que le deuxième demi-collier soit supporté par le premier demi-collier et vienne naturellement sensiblement en regard de ce dernier.

D'autres avantages et objets de l'invention seront explicités plus en détails à la lecture de la description qui suit et à l'aide des dessins annexés fournis à titre purement explicatif et non limitatif, dans lesquels :
- La figure 1 illustre, selon une vue en perspective, deux demi-colliers destinés à être assemblés pour former le dispositif conforme à l'invention.
- La figure 2 illustre, selon une vue en perspective, un demi-collier conforme à l'invention monté à la jonction entre deux éléments de canalisation.
- La figure 3 illustre, selon une vue de côté, le positionnement des deux demi-colliers conformes à l'invention dans une position précédant leur accrochage mutuel.
- La figure 4 illustre, selon une vue en perspective, le dispositif de verrouillage conforme à l'invention.
- La figure 5 illustre, selon une vue de côté, les deux demi-colliers conformes à l'invention accrochés l'un à l'autre.
- La figure 6 illustre, selon une vue de côté, le dispositif de verrouillage conforme à l'invention en position dite « *verrouillée* ».
- La figure 7 illustre, selon une vue de côté en coupe, les moyens d'accrochage conformes à l'invention dans une position dite *« verrouillée* » du dispositif de verrouillage.
- La figure 8 illustre, selon une vue de côté en coupe, les moyens d'accrochage conformes à l'invention dans une position dite *« déverrouillée* » du dispositif de verrouillage.
- La figure 9 illustre, selon une vue en perspective, un mode de réalisation préférentielle des deux demi-colliers conformes à l'invention dans une position précédant leur assemblage.

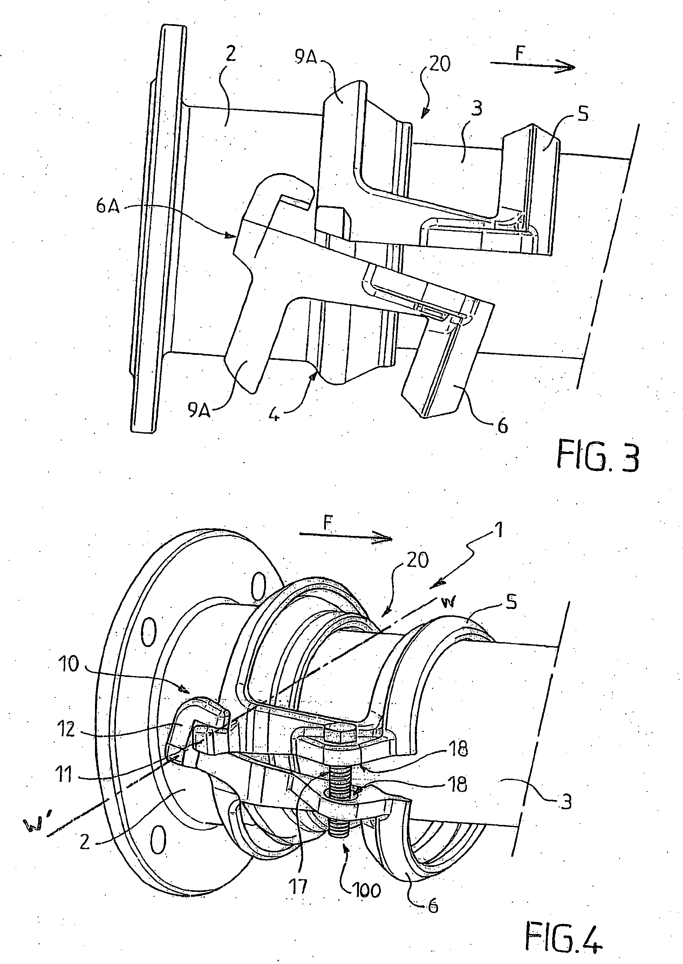

La figure 4 montre un dispositif 1 de verrouillage pour le raccordement d'éléments de canalisation.

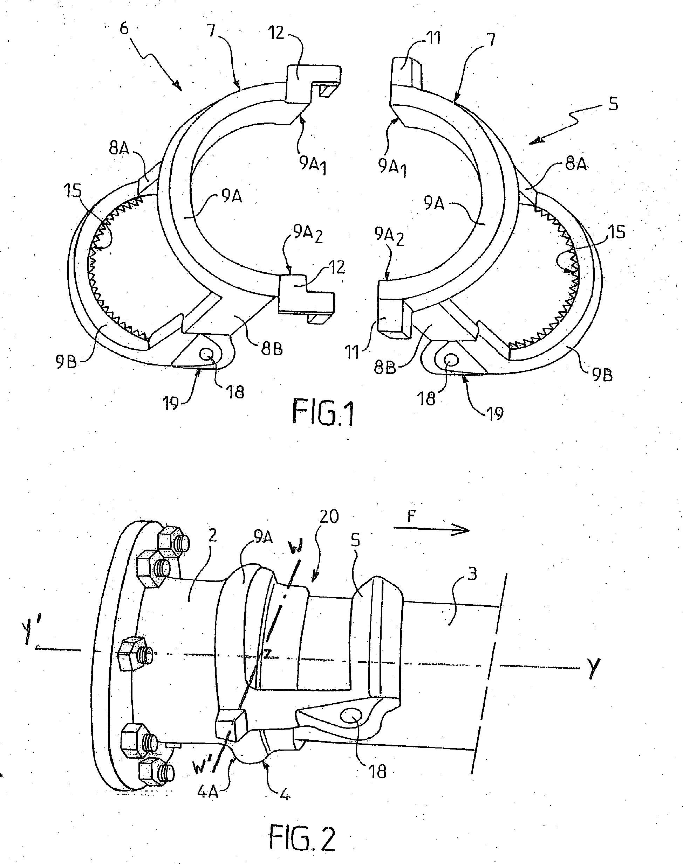

Selon l'invention, un tel dispositif 1 est destiné à être monté à la jonction 20 entre un élément de canalisation amont, dit élément amont 2, et un élément de canalisation aval, dit élément aval 3 (figures 2, 3, 4 et 5).

Les termes *« amont»* et *« aval» »* ne font pas référence au sens de l'écoulement dans la jonction 20 entre les deux éléments de canalisation 2, 3. Ainsi, nous considérerons, pour les besoins de la description, et de manière purement arbitraire, que l'amont et l'aval sont définis par rapport à la flèche F, dont le sens est indépendant du sens de l'écoulement dans les tuyaux.

Les éléments amont 2 et aval 3 se présentent avantageusement sous la forme de tuyaux, raccords ou plus généralement toutes pièces à emboîtement de préférence cylindriques, susceptibles d'être emboîtés l'un dans l'autre. Pour cette raison, de tels éléments de canalisation sont généralement dits « *à emboîtement* », terminologie bien connue de l'homme du métier.

Les éléments amont 2 et aval 3 peuvent par exemple être utilisés pour raccorder une sortie de pompe à une canalisation existante, ou encore tout simplement pour raccorder deux portions de canalisation. Ils sont de préférence conformés de manière à pouvoir être emboîtés l'un dans l'autre.

En particulier, l'élément aval 3 doit pouvoir être introduit, avec un faible jeu, à l'intérieur de l'élément amont 2, de telle sorte que les diamètres interne respectivement externe des éléments amont 2 et aval 3 sont préférentiellement ajustés.

Selon l'invention, et tel que cela est représenté sur les figures 2 et 3, l'élément amont 2 est pourvu d'un relief 4 destiné à former une butée à l'encontre du dispositif 1 de verrouillage.

Le relief 4 est de préférence formé par un bossage annulaire agencé pour accueillir un joint d'étanchéité (non représenté aux figures) destiné à assurer l'étanchéité du raccordement entre les deux éléments de canalisation 2, 3. L'élément aval 3 vient en effet s'emboîter, dans sa position fonctionnelle ou d'utilisation, au sein de l'élément aval 3, jusqu'à ce que le joint d'étanchéité vienne en appui contre la paroi latérale externe de l'élément aval 3, assurant ainsi l'étanchéité au niveau de la jonction 20.

Bien évidemment, le relief 4 peut également être formé par un creux ou dépression annulaire (non représenté aux figures) à l'intérieur duquel le dispositif 1 de verrouillage viendrait prendre appui pour assurer le verrouillage du raccordement.

Le dispositif 1 de verrouillage est avantageusement utilisé afin d'empêcher le déboîtement de l'élément aval 3 sous l'action de la pression hydraulique et spécifiquement conçu pour s'adapter sur les tuyaux à emboîtement.

Ainsi, l'élément amont 2 et le relief 4 associé sont avantageusement agencés pour coopérer avec le dispositif 1 de verrouillage de manière à retenir la poussée hydraulique. En particulier, l'élément amont 2, par l'intermédiaire du relief 4, exerce un contre-effort sur le dispositif 1, opposé à la poussée hydraulique, retenant ainsi le dispositif 1 et l'élément aval 3.

Selon l'invention, et tel que cela est représenté sur les figures 1, 3, 4, 5 et 6, le dispositif 1 comporte un premier demi-collier 5 ainsi qu'un deuxième demi-collier 6.

Tel que cela est représenté sur la figure 2, le premier demi-collier 5 est destiné à être monté de préférence en premier à la jonction 20 entre les deux éléments de canalisation 2, 3. Il est toutefois bien évidemment envisageable d'inverser l'ordre de montage des demi-colliers, et ce sans sortir du cadre de l'invention.

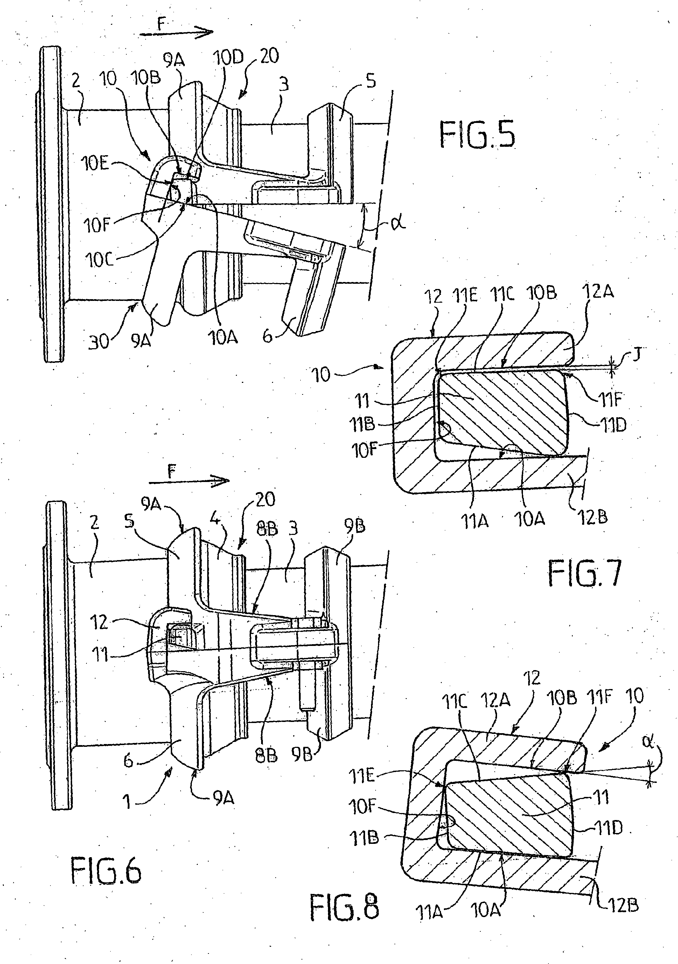

Selon l'invention et tel que cela est représenté sur les figures 4 et 6, le deuxième demi-collier 6 est destiné à être associé au premier demi-collier 5 de manière à former un collier 5, 6 autour de la jonction 20, au moins une partie du collier 5, 6 ainsi formé venant en appui contre le relief 4.

L'accrochage des demi-colliers 5, 6 s'effectue avantageusement à l'arrière du relief 4 (c'est-à-dire à l'amont du relief 4) sur l'élément amont 2, suivant un axe d'accrochage sensiblement perpendiculaire à la direction longitudinale Y-Y' d'extension des éléments de canalisation 2, 3.

Plus précisément, les moyens d'accrochage 10 sont avantageusement disposés de part et d'autre des premier et deuxième demi-colliers 5, 6 de manière à être positionnés de façon diamétralement opposée sur l'élément amont 2.

Cette configuration des moyens d'accrochage 10 permet ainsi d'effectuer un accrochage de l'amont vers l'aval de l'un des demi-colliers par rapport à l'autre, et d'assurer ainsi une meilleure mise en appui, suivant la direction longitudinale Y-Y', du dispositif 1 de verrouillage contre le relief 4.

Le dispositif 1 de verrouillage est alors en mesure de retenir, dans les conditions optimales, la pression hydraulique tendant à désengager l'élément aval 3 de l'élément amont 2.

La configuration d'accrochage, de l'amont vers l'aval, permet également le montage du dispositif 1 de verrouillage dans des endroits d'accès difficile où le technicien dispose d'un espace latéral très limité de part et d'autre des éléments de canalisation 2, 3, c'est-à-dire dans la direction perpendiculaire à la direction longitudinale Y-Y'.

Avantageusement et tel que cela est représenté sur la figure 1, le premier demi-collier 5 et le deuxième demi-collier 6 sont formés chacun par une armature 7 qui épouse de préférence la forme de la jonction 20 entre les deux demi-colliers 5, 6.

De façon particulièrement avantageuse, chacune des deux armatures 7 est préférentiellement délimitée latéralement par deux bordures latérales 8A, 8B sensiblement opposées.

Tel que cela est bien connu de l'homme du métier, les armatures 7 sont préférentiellement réalisées à partir d'un matériau métallique rigide, de manière à offrir une résistance suffisante à la poussée hydraulique.

Chaque armature 7 comporte avantageusement une demi-bride amont 9A et une demi-bride aval 9B (figures 1 et 6).

Tel que cela est représenté sur la figure 2 et la figure 6, chacun des deux demi-colliers 5, 6 est préférentiellement monté sur la jonction 20 de telle manière que chaque demi-bride amont 9A vienne en appui contre le relief 4, avantageusement contre la paroi amont 4A de ce dernier. Le dispositif 1 de verrouillage vient alors en butée contre le relief 4 par le biais de chaque demi-bride amont 9A, retenant ainsi la poussée hydraulique.

Selon l'invention, le premier et le deuxième demi-colliers 5, 6 comportent des moyens d'accrochage 10 mutuel automatique conformés pour coopérer ensemble, de manière à permettre l'accrochage relatif des deux demi-colliers 5, 6 (figure 4).

Avantageusement et tel que cela est représenté sur la figure 5, les moyens d'accrochage 10 sont conformés et disposés de manière à permettre l'accrochage du deuxième demi-collier 6 sur le premier demi-collier 5, de telle sorte que le premier demi-collier 5 supporte le deuxième demi-collier 6. De cette façon, le deuxième demi-collier 6 vient naturellement, sous l'effet de son propre poids, dans une position d'équilibre stable, position dans laquelle le poids du deuxième demi-collier 6 est avantageusement supporté sensiblement en totalité par le premier demi-collier 5. Ainsi, l'opérateur n'a pas besoin de maintenir le deuxième demi-collier en équilibre.

La coopération des moyens d'accrochage 10 permet donc de réaliser directement un pré-assemblage des deux demi-colliers 5, 6 l'un avec l'autre, sans avoir recours à une pièce de liaison supplémentaire, ce qui simplifie et accélère avantageusement la mise en place du dispositif 1.

De façon particulièrement avantageuse, les moyens d'accrochage 10 sont conformés pour que le deuxième demi-collier 6 se positionne naturellement, c'est-à-dire sous l'action de son propre poids, sensiblement en vis-à-vis du premier demi-collier 5. Les moyens d'accrochage 10 permettent ainsi de réaliser un pré-positionnement automatique et naturel des deux demi-colliers 5, 6 l'un par rapport à l'autre, et ce sans avoir recours ni à une pièce mécanique supplémentaire, ni à l'aide de l'opérateur.

De façon particulièrement avantageuse et tel que cela est représenté sur la figure 5, les moyens d'accrochage 10 sont préférentiellement conformés de manière à permettre un débattement angulaire du deuxième demi-collier 6 relativement au premier demi-collier 5 correspondant à un angle maximum α de débattement.

Plus précisément, les moyens d'accrochage 10 forment une articulation d'axe principal W-W' sensiblement confondu avec l'axe d'accrochage et donc perpendiculaire à l'axe longitudinal Y-Y', les demi-colliers 5, 6 étant susceptibles de tourner l'un par rapport à l'autre autour dudit axe principal W-W'.

A titre d'exemple purement illustratif et non limitatif, l'angle α pourra être de l'ordre de 15°. Un tel débattement confère ainsi une certaine souplesse au dispositif 1 de verrouillage, souplesse qui facilite la mise en place du dispositif par l'opérateur.

Le débattement maximal est obtenu lorsque les deux demi-colliers 5, 6 viennent en butée l'un contre l'autre, cette fonction de butée étant également assurée par l'agencement particulier des moyens d'accrochage 10 (figure 5). Ces derniers présentent en effet des régions d'appui 10A, 10B, 10F préférentiellement planes qui, lorsque le débattement est maximal, viennent au contact de parois de butée 10C, 10D, 10E correspondantes, préférentiellement formées par des découpes ménagées dans les moyens d'accrochage 10 (figure 5).

Avantageusement, les moyens d'accrochage 10 sont de préférence intégrés structurellement aux deux demi-colliers 5, 6.

Ainsi, les moyens d'accrochage 10 sont préférentiellement venus de matière avec les demi-colliers 5, 6 associés de telle sorte qu'ils forment ensemble une structure monobloc permettant d'obtenir de bonnes performances d'une part en matière de résistance mécanique, et d'autre part en matière de coûts de fabrication.

De façon particulièrement avantageuse, les moyens d'accrochage 10 sont de préférence formés par au moins un organe mâle 11 et au moins un organe femelle 12 correspondant. Ainsi, l'organe mâle 11 et l'organe femelle 12 sont préférentiellement réalisés de manière à pouvoir être engagés l'un dans l'autre pour coopérer (figures 4 et 6).

L'organe mâle est préférentiellement formé par un ergot 11, l'organe femelle étant préférentiellement formé par un crochet 12 correspondant.

Selon un mode de réalisation préférentielle de l'invention représenté sur les figures 1, 3, 4 et 6, l'ergot 11 est préférentiellement situé sur le premier demi-collier 5 tandis que le crochet 12 est avantageusement situé sur le deuxième demi-collier 6, de telle sorte que l'ergot 11 et le crochet 12 coopèrent ensemble. Selon ce mode de réalisation, le premier demi-collier 5 est préférentiellement monté en premier sur la jonction 20 et le deuxième demi-collier 6 est monté dans un second temps. Afin de faciliter la mise en place des deux demi-colliers 5, 6, le crochet 12 s'ouvre de préférence vers l'aval lorsqu'il est monté sur la jonction 20, de manière à permettre l'accrochage du deuxième demi-collier 6 sur le premier demi-collier 5 déjà en position.

Selon un autre mode de réalisation de l'invention, non représenté aux figures, l'ergot 11 est préférentiellement situé sur le deuxième demi-collier 6 tandis que le crochet 12 est avantageusement situé sur le premier demi-collier 5. Selon ce mode de réalisation, le premier demi-collier 5 est toujours monté en premier sur la jonction 20 mais, afin de faciliter la mise en place du deuxième demi-collier 6, et en particulier son accrochage par l'arrière du relief 4, le crochet 12 s'ouvre de préférence vers l'amont.

Selon une variante préférentielle de l'invention, les moyens d'accrochage 10 sont formés par deux ergots 11 et deux crochets 12 correspondants. De plus, chacun des deux ergots 11 et chacun des deux crochets 12 sont de préférence positionnés à chacune des deux extrémités 9A₁, 9A₂ des demi-brides amont 9A (figure 1).

Afin d'assurer un bon équilibrage mécanique des contraintes exercées sur le dispositif 1, les deux paires formées chacune par l'ergot 11 et le crochet 12 sont préférentiellement disposées de façon diamétralement opposée sur la jonction 20.

Selon une variante préférentielle de réalisation de l'invention représentée sur les figures 7 et 8, l'un au moins des crochets 12 comporte deux bras 12A, 12B sensiblement parallèles de telle sorte que le crochet 12 a une section longitudinale sensiblement en U. Avantageusement, l'ergot 11 associé au crochet 12 sensiblement en U a préférentiellement une section transversale polygonale.

Selon une variante préférentielle de l'invention, chacun des ergots 11 a une section transversale polygonale. Mais il est bien évidemment envisageable de réaliser un dispositif 1 dans lequel un seul des ergots 11 a une section transversale polygonale, l'autre ergot 11 ayant une section circulaire.

De façon particulièrement avantageuse, la section transversale est délimitée par des contours 11A, 11B, 11C, 11D agencés et dimensionnés relativement à la forme du crochet 12 de manière à permettre un débattement du deuxième demi-collier 6 relativement au premier demi-collier 5 (figures 7 et 8).

Lorsque l'angle de débattement est sensiblement nul, le dispositif 1 est dit en position *« verrouillée* », cette position correspondant à un agencement particulier des moyens d'accrochage 10 représenté sur la figure 7.

Au contraire, lorsque le débattement correspond à un angle maximal α, le dispositif 1 est dit en position *« déverrouillée »* ou « *de repos »,* et l'agencement correspondant des moyens d'accrochage 10 est représenté sur la figure 8.

Le débattement doit être suffisant pour conférer une certaine souplesse au dispositif 1 de verrouillage, de manière à faciliter son installation, mais ce débattement ne doit pas être trop important de manière à réduire sensiblement le jeu susceptible de se former entre l'ergot 11 et le crochet 12 lorsque le dispositif 1 est verrouillé (figure 6).

Ainsi, le débattement doit permettre un pré-positionnement des deux demi-colliers 5, 6 l'un par rapport à l'autre tout en limitant automatiquement l'angle maximum α d'ouverture entre ces derniers. Une attention toute particulière doit donc être apportée à la forme ainsi qu'à l'agencement relatif des moyens d'accrochage 10.

A cet effet, l'ergot 11 et le crochet 12 sont préférentiellement conformés de telle manière que, dans la position dite « *déverrouillée* » du dispositif 1, l'une des régions d'appui 10A située sur le crochet 12 vient au contact de l'un des contours 11A correspondant, lequel forme une paroi de butée 10C (figure 8).

En outre, l'ergot 11 et le crochet 12 sont préférentiellement conformés de telle sorte que, dans la position dite *« déverrouillée »,* l'une des régions d'appui 10B située sur le crochet 12 vient au contact de l'un des contours 11C de l'ergot 11. De façon encore plus préférentielle, deux des régions d'appui 10B, 10F viennent au contact respectivement de deux des arêtes 11E, 11F de l'ergot 11.

Lorsque les deux demi-colliers 5, 6 sont verrouillés l'un avec l'autre il ne doit pas exister un jeu J trop important qui serait susceptible de nuire à la rigidité globale du dispositif 1. Ainsi, le jeu J s'évalue par la distance séparant, en position « *verrouillée* » du dispositif 1, l'un des contours 11C de l'ergot 11 de la région d'appui 10B située sur le crochet 12.

Pour cette raison, les contours 11A, 11B, 11C, 11D délimitent avantageusement un trapèze-rectangle que viennent entourer, avec un faible jeu J, les bras 12A, 12B du crochet 12. La forme de trapèze-rectangle est ainsi préférée à celle d'un autre polygone, et notamment à celle d'un rectangle, dans la mesure où une forme de rectangle nécessiterait nécessairement d'avoir un jeu important en position « *verrouillée* » pour parvenir au même angle maximal α de débattement.

Il est également envisageable, sans sortir du cadre de l'invention, que le débattement maximal soit obtenu lorsque le deuxième demi-collier 6 vient en butée contre l'élément amont 2, notamment par le biais de sa bride amont 9A venant au contact de la surface externe de l'élément amont 2 au niveau d'une zone de contact 30 (figure 5).

Cette situation peut notamment se produire lorsque les éléments de canalisation 2, 3 présentent un diamètre externe important. C'est alors l'élément amont 2 qui assure avantageusement la fonction de butée, de telle sorte que dans cette configuration, l'ergot 11 ne présente pas nécessairement une section polygonale, mais par exemple une section circulaire, autorisant la rotation des deux demi-colliers 5, 6 l'un par rapport à l'autre.

Avantageusement, le dispositif 1 de verrouillage selon l'invention comporte des moyens d'ancrage 15, agencés pour permettre l'ancrage du collier 5, 6 sur l'élément aval 3 (figure 1).

Les moyens d'ancrage 15 sont préférentiellement formés par des bagues ou des taquets découpés dans la masse M des matériaux métalliques, thermoplastiques ou abrasifs, pour former des stries capables de pénétrer superficiellement le matériau formant l'élément aval 3.

Les éléments de canalisation 2, 3 peuvent ainsi être réalisés à partir de PVC ou encore de métaux et la nature du matériau composant les moyens d'ancrage 15 doit donc être adaptée au matériau constitutif de l'élément aval 3.

De même, la nature des armatures 7 formant les demi-colliers 5, 6 sera de préférence métallique, de manière à supporter les contraintes mécaniques exercées au niveau de la jonction 20 entre les deux éléments de canalisation 2, 3.

Les moyens d'ancrage 15 sont de préférence positionnés sur chaque demi-bride aval 9B, précisément dans la partie interne de chacune des demi-brides aval 9B, de manière à pénétrer la paroi externe de l'élément aval 3.

De tels moyens d'ancrage 15 sont bien connus de l'homme du métier et ne font pas l'objet d'une description plus détaillée.

Avantageusement et tel que cela est représenté sur la figure 4, le dispositif 1 selon l'invention comporte des moyens de verrouillage 100 destinés à assurer le serrage des moyens d'ancrage 15 sur l'élément aval 3, générant ainsi le verrouillage du raccordement entre les deux éléments de canalisation 2, 3.

Selon un premier mode de réalisation de l'invention, illustré sur les figures 1 à 6, les moyens de verrouillage 100 comportent des ouvertures 18 ménagées dans chacun des deux demi-colliers 5, 6.

Les ouvertures 18 sont avantageusement ménagées de telle manière que lorsque les moyens d'accrochage coopèrent ensemble, en particulier lorsque l'ergot 11 coopère avec le crochet 12, les deux demi-colliers 5, 6 se prépositionnent l'un par rapport à l'autre de telle manière que les ouvertures 18 appareillées, c'est-à-dire correspondant chacune à un demi-collier 5, 6, se trouvent automatiquement en regard l'une de l'autre, de telle sorte qu'une vis peut être introduite à l'intérieur de ces dernières.

Les ouvertures 18 sont de préférence ménagées dans des oreilles 19 solidaires des armatures 7 et situées de préférence le long des bordures 8A, 8B, préférentiellement vers les demi-brides aval 9B (figure 1). Les oreilles 19 sont préférentiellement venues de matière avec les armatures 7.

Les moyens de verrouillage 100 comportent également des boulons 17 préférentiellement agencés de manière à coopérer avec les ouvertures 18 afin d'assurer le serrage des moyens d'ancrage 15, et en particulier de contrôler la pénétration des moyens d'ancrage 15 dans la paroi externe de l'élément aval 3.

Ainsi, les vis peuvent être montées dans les ouvertures 18 alors même que le débattement entre les deux demi-colliers 5, 6 est maximum.

Le serrage des boulons 17 permet alors de rapprocher les deux demi-colliers 5, 6 l'un contre l'autre, les bordures 8A, 8B du premier demi-collier 5 venant préférentiellement en appui contre les bordures 8A, 8B correspondantes du deuxième demi-collier (figure 6). Par ce serrage, le dispositif 1 passe de la position dite *« déverrouillée* » représentée sur les figures 4 et 5 à la position dite « *verrouillée* » représentée sur la figure 6.

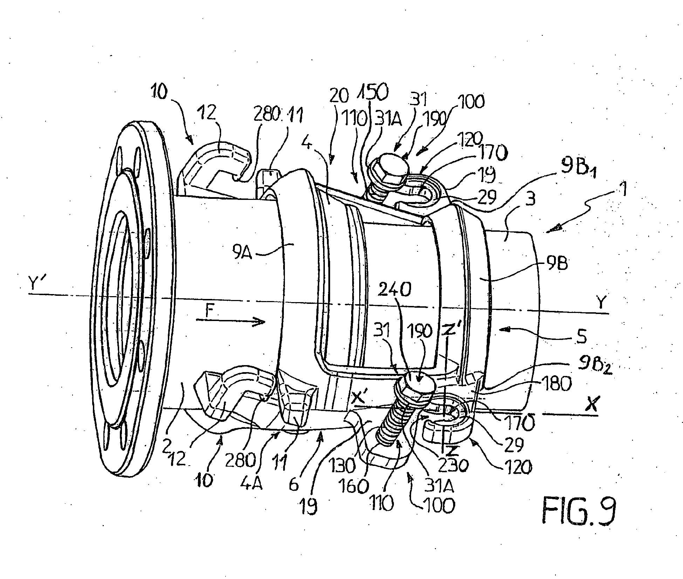

Selon un deuxième mode de réalisation préférentielle de l'invention illustré sur la figure 9, et qui constitue d'ailleurs une invention à part entière, indépendante des moyens d'accrochage 10, les moyens de verrouillage 100 comportent au moins un organe de guidage 110 monté à demeure sur le deuxième demi-collier 6 et au moins un élément de réception 120 disposé sur le premier demi-collier 5 et dans lequel l'organe de guidage 110 vient s'engager en position de fermeture du dispositif 1.

L'expression *« à demeure* » fait ici référence au fait que l'organe de guidage 110 est solidarisé, avant la pose, au deuxième demi-collier. En d'autres termes, l'organe de guidage 110 est monté, avant la pose, de manière stable et définitive sur le deuxième demi-collier 6, sans qu'il soit nécessaire de le retirer pour assurer l'assemblage des deux demi-colliers 5, 6.

Avantageusement, l'organe de guidage 110 présente une forme sensiblement allongée, du genre doigt ou autre, lui permettant d'une part de former un moyen de repère facilitant le positionnement relatif des deux demi-colliers 5, 6 en vue de leur assemblage, lors de la mise en regard de l'organe de guidage 110 et de l'élément de réception 120, et d'autre part d'assurer, par coopération avec l'élément de réception 120, le guidage du deuxième demi-collier 6 vers sa position de fermeture relativement au premier demi-collier 5. Le dispositif 1 de verrouillage ainsi formé peut donc être facilement mis en place par l'utilisateur avec un nombre minimum de manipulations et le positionnement relatif optimal des deux demi-colliers 5, 6 peut être facilement repéré grâce à la forme particulière de l'organe de guidage 110. Le montage du dispositif 1 conforme à l'invention est en outre intuitif et logique, ce qui permet sa manipulation par un opérateur non expert.

Avantageusement, le moyen de guidage 110 est formé par une vis 130, c'est-à-dire une tige filetée (figure 9).

Selon une première variante de l'invention, non représentée aux figures, la vis 130 peut être montée de manière fixe sur le deuxième demi-collier 6, et par exemple soudée, collée ou venue de matière avec le deuxième demi-collier 6.

Selon une autre variante préférentielle de l'invention, illustrée sur la figure 9, la vis 130 est avantageusement montée de façon mobile sur le deuxième demi-collier 6 à l'aide de moyens de maintien formés par :
- d'une part un filetage externe 150 ménagé sur au moins une partie de la longueur de la vis 130,
- et d'autre part un trou taraudé 160, ménagé dans le deuxième demi-collier 6 et disposé sensiblement en regard de l'élément de réception 120 lorsque les deux demi-colliers 5, 6 sont en position de fermeture, ledit trou taraudé 160 assurant, par coopération avec le filetage externe 150 de la vis 130, le maintien en position de cette dernière sur le deuxième demi-collier 6.

Avantageusement, et tel que cela est représenté sur la figure 9, l'élément de réception 120 est préférentiellement formé par une ouverture 170 ménagée dans le premier demi-collier 5 et adaptée pour recevoir l'organe de guidage 110. L'ouverture 170 et l'organe de guidage 110 sont préférentiellement disposés sur les oreilles 19.

Les moyens de verrouillage 100 comportent avantageusement des moyens d'actionnement 190 aptes à commander le verrouillage du dispositif 1. Les moyens d'actionnement 190 sont ainsi conçus de manière à pouvoir être manipulés par l'utilisateur de manière à assurer le serrage des deux demi-colliers 5, 6 l'un contre l'autre et donc le verrouillage du dispositif.

Afin d'assurer un serrage efficace des moyens d'ancrage 15 sur l'élément aval 3, les moyens de verrouillage 100 comportent de préférence au moins une paire d'ouvertures 170 aval, ménagées de part et d'autre du premier demi-collier 5 et une paire d'organes de guidage 110 aval, disposés de part et d'autre du deuxième demi-collier 6 de telle sorte que lors du positionnement des deux demi-colliers 5, 6 en regard l'un de l'autre en vue de la fermeture, la paire d'ouvertures 170 aval se trouve sensiblement en regard de la paire d'organes de guidage 110 aval.

De façon préférentielle, la paire d'ouvertures 170 aval et la paire d'organes de guidage 110 aval sont préférentiellement disposés vers les deux extrémités 9B₁, 9B₂ de chaque demi-bride aval 9B de manière à assurer un serrage le plus efficace possible des moyens d'ancrage 15 sur l'élément aval 3.

Bien évidemment, il est également possible de ne prévoir qu'un seul organe de guidage 110 aval, monté à demeure sur le deuxième demi-collier 6. Dans cette variante (non représentée aux figures), les moyens de verrouillage peuvent avantageusement comporter d'une part ledit organe de guidage aval destiné à coopérer avec un élément de réception correspondant ménagé sur le premier demi-collier, et d'autre part deux ouvertures, ménagées respectivement sur le premier et le deuxième demi-colliers en regard l'une de l'autre et associées par exemple à un boulon destiné à être introduit au sein desdites ouvertures pour coopérer avec ces dernières afin d'assurer, en association avec l'organe de guidage aval et l'élément de réception, le serrage des moyens d'ancrage.

Selon une variante de l'invention, non représentée aux figures, les moyens de verrouillage 100 peuvent également comporter une paire d'ouvertures amont ménagées de part et d'autre du premier demi-collier 5 vers les extrémités 9A₁, 9A₂ de la demi-bride amont 9A, et une paire d'organes de guidage amont disposés de part et d'autre du deuxième demi-collier 6, au niveau des extrémités 9A₁, 9A₂ de la demi-bride amont 9A. L'expression « *amont»* fait ici référence au fait que les ouvertures et les organes de guidage sont situés en amont du relief. Chaque organe de guidage amont est alors préférentiellement formé par une vis amont, montée à demeure au sein d'un trou taraudé amont, et destinée à coopérer avec l'ouverture amont correspondante de manière à assurer le verrouillage du dispositif 1 sur l'élément amont 2. Selon cette variante, les ouvertures amont et organes de guidage amont remplacent ou s'ajoutent aux moyens d'accrochage 10 mutuel automatique.

Les ouvertures amont et aval peuvent être avantageusement circulaires, auquel cas les moyens d'actionnement 190 sont préférentiellement formés par au moins un écrou destiné à être rapporté sur au moins l'une des extrémités de chaque vis amont ou aval en vue de rapprocher, par vissage, les deux demi-colliers 5, 6 vers leur position de verrouillage. Bien évidemment, les moyens d'actionnement 190 peuvent également être formés par deux écrous adaptés pour être vissés à chacune des extrémités de chaque vis amont ou aval en vue d'assurer le serrage.

Selon une variante préférentielle représentée sur la figure 9, les ouvertures 170 sont préférentiellement formées par des encoches 230. Selon cette variante, les moyens d'actionnement 190 peuvent être avantageusement formés par une tête de vis 240 disposée à l'une des extrémités de la vis 130 de manière à assurer le serrage. Dans ce cas, il n'est plus nécessaire d'avoir recours à un écrou pour procéder au verrouillage et l'ensemble des moyens de verrouillage 100 peuvent être maintenus à demeure sur les demi-colliers 5, 6 lors de leur assemblage ou lors de leur démontage, ces deux dernières opérations pouvant donc s'effectuer sans qu'il soit nécessaire d'avoir recours à des pièces de verrouillage supplémentaires de verrouillage.

Tel que cela est représenté sur la figure 9, les encoches 230 s'ouvrent préférentiellement vers la même direction, et de préférence suivant la direction longitudinale Y-Y' d'extension des éléments de canalisation 2, 3. Les encoches 230 s'ouvrent ainsi avantageusement vers l'amont ou vers l'aval, et de préférence vers l'amont, de manière à permettre, lors de l'assemblage et notamment lors de l'accrochage des demi-colliers 5, 6 à l'aide des moyens d'accrochage 10, l'introduction simultanée des vis 130 au sein desdites encoches 230, et ce en effectuant, par exemple, un simple déplacement du deuxième demi-collier 6 de l'amont vers l'aval selon la flèche F, le premier demi-collier 5 restant avantageusement en position sur la jonction 20.

Selon un aspect particulièrement intéressant de l'invention, chaque organe de guidage 110 pourvu de son moyen d'actionnement 190, notamment chaque vis 130 munie d'une tête de vis 240 ou d'un écrou, peut également constituer un moyen d'accrochage permettant à l'utilisateur d'accrocher le deuxième demi-collier 6 sur le premier demi-collier 5 de façon simple et intuitive, en laissant simplement reposer la tête de vis 240 (ou l'écrou) sur le pourtour de l'encoche 230 une fois la vis 130 introduite au sein de ladite encoche 230.

L'utilisateur peut ensuite procéder à l'opération de verrouillage des deux demi-colliers 5, 6, en actionnant la tête de vis 240 ou l'écrou de manière à visser la vis 130 associée au sein du trou taraudé 160 jusqu'au serrage complet des deux demi-colliers 5, 6 l'un contre l'autre.

De façon préférentielle, les moyens d'accrochage 10 et les moyens de verrouillage 100 sont de préférence conformés pour que lors de l'accrochage relatif des deux demi-colliers 5, 6 à l'aide des moyens d'accrochage 10, les organes de guidage 110 aval, montés à demeure sur le deuxième demi-collier 6, viennent naturellement et directement se loger au sein des éléments de réception 120 correspondants, à savoir les encoches 230.

A cet effet, les organes de guidage 110 aval s'étendent, avant la pose, sur une longueur suffisante à partir du deuxième demi-collier 6 et en direction du premier demi-collier 5 de manière à engager directement les éléments de réception 120 disposés sur le premier demi-collier 5 lors de l'accrochage relatif des deux demi-colliers 5, 6.

Selon un aspect particulièrement intéressant de l'invention, chaque ouverture 170, qu'elle soit délimitée par un pourtour fermé (anneau) ou ouvert (encoche) peut avantageusement se présenter sous la forme d'une lumière de guidage sensiblement oblongue formant une glissière au sein de laquelle l'organe de guidage 110 est apte à se déplacer suivant une direction X-X' sensiblement perpendiculaire à l'axe Z-Z' de perçage de ladite ouverture 170 et de préférence sensiblement parallèle à la direction longitudinale Y-Y' d'extension des éléments de canalisation 2, 3. La lumière de guidage est ainsi avantageusement allongée selon la direction X-X'.

Ainsi, lors du déplacement du deuxième demi-collier 6 relativement au premier demi-collier 5 de l'amont vers l'aval suivant la flèche F en vue de son accrochage, les deux organes de guidage 110 aval viennent directement se loger à l'intérieur des ouvertures 170 aval correspondantes et se déplacent à l'intérieur de ces dernières dans le sens de la flèche F, sensiblement parallèle à la direction longitudinale Y-Y', jusqu'à ce que la position de fermeture du collier 5, 6 soit atteinte.

Afin de limiter la possibilité d'une part de desserrement des moyens de verrouillage 100, et d'autre part de désengagement progressif des deux demi-colliers l'un par rapport à l'autre suivant la direction longitudinale Y-Y', une fois le collier 5, 6 verrouillé, le dispositif 1 de verrouillage comporte des moyens d'immobilisation relative des deux demi-colliers 5, 6 suivant la direction longitudinale Y-Y'.

Les moyens d'immobilisation peuvent avantageusement être formés par un prolongement recourbé 280 du crochet 12, destiné à coopérer avec l'ergot 11 pour empêcher le déplacement relatif des deux demi-colliers 5, 6 suivant la direction longitudinale Y-Y'.

Selon une autre variante, les moyens d'immobilisation relative sont formés par un organe de blocage 31 disposé sur l'organe de guidage 110, préférentiellement à l'une des extrémités de ce dernier, et par un alésage 29 ménagé sur le pourtour de l'ouverture 170, ledit alésage étant adapté pour recevoir et coopérer avec l'organe de blocage 31 lors du verrouillage, afin d'empêcher le déplacement relatif des deux demi-colliers 5, 6 suivant la direction longitudinale Y-Y'.

A titre d'exemple, l'organe de blocage 31 pourra être directement formé par les moyens d'actionnement 190, notamment l'écrou ou la tête de vis 240, l'alésage 29 étant alors adapté pour recevoir et immobiliser ces derniers dans la position de verrouillage.

De façon préférentielle, l'organe de blocage 31 sera formé par une rondelle 31A disposée sous les moyens d'actionnement 190, notamment sous la tête de vis 240 (ou sous l'écrou), ladite rondelle 31A étant adaptée pour venir se loger au sein de l'alésage 29 lors du serrage en épousant sensiblement la forme dudit alésage 29.

Le dispositif 1 de verrouillage selon l'invention est donc agencé de telle manière que sa manipulation par l'opérateur est facilitée, et qu'il peut donc être mis en place de manière simple et rapide, même dans des endroits d'accès difficile.

Un autre avantage du dispositif 1 de verrouillage conforme à l'invention est qu'il peut être fabriqué par un procédé simple à mettre en oeuvre, et par exemple par moulage dit *« au naturel »,* c'est-à-dire que les deux demi-colliers 5, 6 et les moyens d'accrochage 10 associés peuvent être obtenus sans qu'il soit nécessaire d'effectuer un noyautage ou un usinage de pièces qui générerait inévitablement un surcoût de fabrication. En effet, la forme des ergots 11 et des crochets 12 ne présente pas de contre-dépouille et peut être obtenue par moulage ou matriçage dit « *au naturel* ».

Un autre avantage du dispositif 1 conforme à l'invention est qu'il ne nécessite qu'un nombre limité de pièces assurant le serrage et le verrouillage, ce qui permet de réduire son coût global de fabrication.

L'invention concerne également un procédé de mise en place d'un dispositif de verrouillage pour le raccordement d'éléments de canalisation 2, 3.

Selon l'invention, le procédé comprend une étape dans laquelle on positionne et on fait reposer un premier demi-collier 5 à la jonction 20 entre un élément de canalisation amont 2, pourvu d'un relief 4 destiné à former une butée à l'encontre du dispositif 1, et un élément de canalisation aval 3, de telle sorte qu'au moins une partie dudit premier demi-collier 5 vienne en appui contre le relief 4. Ainsi, le premier demi-collier 5 pourra venir en appui contre le relief 4 par l'intermédiaire de la demi-bride amont 9A, tel que cela est représenté sur la figure 2.

Le premier demi-collier 5 peut ainsi rester de lui-même en équilibre sur la jonction 20, notamment lorsque la canalisation est horizontale. En revanche, lorsque la canalisation est verticale ou inclinée, et lorsque l'élément amont 2 est situé en dessous de l'élément aval 3, l'opérateur maintient de préférence le premier demi-collier 5 en position sur la jonction 20 pendant toutes les étapes précédant le verrouillage du dispositif 1 de manière à éviter la chute du premier demi-collier 5, qui dans le cas d'une canalisation inclinée, n'est pas supporté par la canalisation et/ou le relief 4.

Selon l'invention, le procédé comprend une étape où l'on présente l'extrémité amont 6A, et préférentiellement la demi-bride amont 9A, du deuxième demi-collier 6 sensiblement en amont du relief 4 (figure 3).

Le procédé selon l'invention comprend ensuite une étape où l'on positionne le deuxième demi-collier 6 en regard du premier demi-collier 5 à la jonction 20 tout en accrochant, par l'intermédiaire de moyens d'accrochage 10 mutuel automatique, le deuxième demi-collier 6 sur le premier demi-collier 5, de telle manière que le deuxième demi-collier 6 soit supporté par le premier demi-collier 5 et vienne naturellement sensiblement en regard de ce dernier.

Le procédé comporte avantageusement une étape de pré-positionnement, dans laquelle on pré-positionne le deuxième demi-collier 6 au niveau de la jonction 20 sensiblement en regard du premier demi-collier 5 en se repérant à l'aide de l'organe de guidage 110, sensiblement allongé, monté à demeure sur le deuxième demi-collier 5. Grâce à l'organe de guidage 110, l'utilisateur peut ainsi repérer facilement et intuitivement le positionnement relatif optimal des deux demi-colliers 5, 6 l'un par rapport à l'autre en vue de les assembler.

On pourra ainsi par exemple approcher le deuxième demi-collier 6 du premier demi-collier 5 en déplaçant le deuxième demi-collier 6 de l'amont vers l'aval, le premier demi-collier 5 restant immobile sur la jonction 20. On déplacera alors de préférence le deuxième demi-collier 6 jusqu'à ce qu'une partie au moins de ce dernier vienne en appui contre le relief 4, préférentiellement par le biais de la demi-bride amont 9A (figure 5).

Le deuxième demi-collier 6 se maintient alors par lui-même dans une position d'équilibre stable, et est sensiblement intégralement supporté par le premier demi-collier 5, qui peut soit reposer librement sur la jonction 20, soit être maintenu en position par l'opérateur dans le cas d'une canalisation inclinée ou verticale.

Grâce à ce procédé, on relie les deux demi-colliers 5, 6 à l'arrière du relief 4, formé par exemple par un bossage circulaire, et ce à l'aide des moyens d'accrochage 10 agencés de manière à coopérer ensemble pour permettre un pré-positionnement des deux demi-colliers 5, 6 l'un par rapport à l'autre. L'opérateur n'a donc pas besoin de pièces de fixation supplémentaires pour assembler les deux demi-colliers 5, 6 l'un avec l'autre.

L'accrochage du deuxième demi-collier 6 sur le premier demi-collier 5 est ainsi préférentiellement réalisé par l'arrière du relief 4, c'est-à-dire du côté amont de la jonction 20.

Le procédé selon l'invention comporte alors avantageusement une nouvelle étape dans laquelle on verrouille, à l'aide des moyens de verrouillage 100 le deuxième demi-collier 6 contre le premier demi-collier 5 de manière à former un collier 5, 6 de verrouillage (figure 6). Cette étape peut être effectuée à l'aide de boulons 17 (variante illustrée sur la figure 4) ou encore à l'aide des organes de guidage 110.

Selon cette dernière variante, le procédé comporte une étape dans laquelle on engage l'organe de guidage 110 dans l'élément de réception 120 correspondant, disposé sur le premier demi-collier 5. L'engagement de l'organe de guidage 110 au sein de l'élément de réception 120 s'effectue avantageusement simultanément avec l'accrochage, dès lors que l'on fait coopérer le crochet 12 avec l'ergot 11.

Le procédé comprend ensuite une étape dans laquelle on amène le deuxième demi-collier 6 vers sa position de fermeture relativement au premier demi-collier 5 en faisant coulisser l'organe de guidage 110 au sein de l'élément de réception 120.

Dans les variantes où l'élément de réception 120 est formé par une ouverture circulaire (non représentée), le coulissement de l'organe de guidage 110 s'effectue suivant une direction sensiblement parallèle à l'axe de perçage Z-Z' de l'ouverture 170. En revanche, lorsque l'élément de réception 120, notamment l'ouverture 170 est formée par une encoche 230, et que l'organe de guidage 110 est formé par une vis 130 pourvue d'une tête de vis 240, le coulissement de l'organe de guidage 110 s'effectue suivant une direction X-X' sensiblement parallèle à la direction longitudinale Y-Y' d'extension des éléments de canalisation amont et aval 2, 3.

Dans ce dernier cas, l'étape de pré-positionnement décrite précédemment comporte avantageusement les sous-étapes successives suivantes :
- présenter l'extrémité amont, précisément la demi-bride amont 9A du deuxième demi-collier 6 sensiblement en amont du relief 4,
- déplacer le deuxième demi-collier 6 de l'amont vers l'aval, suivant la flèche F, de manière à permettre l'introduction de l'organe de guidage 110 au sein de l'encoche 230, laquelle forme avantageusement une lumière de guidage sensiblement oblongue.

Avantageusement, lors de l'étape de déplacement susmentionnée, on procède simultanément à l'accrochage mutuel des demi-colliers 5, 6 et à l'introduction de l'organe de guidage 110 au sein de l'encoche 230 en vue de verrouiller le dispositif 1.

Bien évidemment, le montage des premier et deuxième demi-colliers 5, 6 pourrait être inversé, de telle sorte que le deuxième demi-collier 6 pourrait être monté en premier au niveau de la jonction 20 et ce, sans sortir du cadre de l'invention. Le choix de l'ordre de montage des premier et deuxième demi-colliers 5, 6 au niveau de la jonction 20 n'est ainsi donné qu'à titre illustratif et pour des besoins purement descriptifs.

Avantageusement, le procédé selon l'invention comporte ensuite une étape, postérieure à l'étape d'accrochage des deux demi-colliers 5, 6 l'un avec l'autre, dans laquelle on fait pivoter, par rotation autour des moyens d'accrochage 10, le deuxième demi-collier 6 relativement au premier demi-collier 5 de manière à mettre en vis-à-vis les deux demi-colliers 5, 6 pour former un collier et assurer le verrouillage du dispositif 1 à l'aide des moyens de verrouillage 100.

Lors de cette étape, le deuxième demi-collier 6 reste avantageusement en permanence accroché sur le premier demi-collier 5, et l'on peut ainsi rapprocher le deuxième demi-collier 6 du premier demi-collier 5, jusqu'à ce que les bordures 8A, 8B associées viennent en contact les unes des autres, tel que cela est représenté sur la figure 6.

L'étape de verrouillage consiste alors à verrouiller, à l'aide de moyens d'actionnement 190, le deuxième demi-collier 6 avec le premier demi-collier 5 de manière à former un collier 5, 6 de verrouillage. Ainsi, lorsque les premier et deuxième demi-colliers 5, 6 sont en position de fermeture, l'utilisateur peut venir actionner les moyens d'actionnement 190, notamment la tête de vis 240 de manière à permettre le vissage de la vis 130 à l'intérieur du trou taraudé 160 correspondant, jusqu'à ce que les oreilles 19 en regard, disposées respectivement sur les premier et deuxième demi-colliers 5, 6, viennent en butée l'une contre l'autre.

Bien évidemment, lorsque les moyens d'actionnement 190 sont formés par un ou plusieurs écrous (non représentés) disposés aux extrémités de la vis 130, l'utilisateur procède au vissage des écrous le long de la vis 130 de manière à rapprocher les oreilles 19 en regard l'une de l'autre, le verrouillage étant effectif lorsque lesdites oreilles 19 viennent en butée l'une contre l'autre et lorsque les bordures 8A, 8B du deuxième demi-collier 6 viennent en appui contre les bordures 8A, 8B correspondantes du premier demi-collier 5.

Ainsi, cette dernière opération permet de faire pénétrer les moyens d'ancrage 15 ménagés de préférence sur chacun des deux demi-colliers 5, 6 dans la paroi externe de l'élément aval 3 à raccorder.

De façon particulièrement avantageuse, le procédé comporte également une étape d'immobilisation relative des deux demi-colliers 5, 6 dans la direction longitudinale Y-Y' d'extension des éléments de canalisation amont et aval 2, 3, dans laquelle on vient loger un organe de blocage 31, disposé sur l'organe de guidage 110, et par exemple formé par les moyens d'actionnement 190 ou encore par une rondelle 31A, au sein d'un alésage 29 ménagé sur le pourtour de l'encoche 230.

Un tel procédé permet donc de mettre en place de façon simplifiée et rapide et quasiment systématique, un dispositif 1 de verrouillage destiné au raccordement d'éléments de canalisation.

Un autre avantage de ce procédé est qu'il peut être mis en oeuvre facilement par un technicien, ce qui constitue une pratique courante dans le domaine.

## Revendications

1. Dispositif de verrouillage pour le raccordement d'éléments de canalisation (2, 3), destiné à être monté à la jonction (20) entre un élément de canalisation amont (2), dit élément amont (2), et un élément de canalisation aval (3), dit élément aval (3), l'élément amont (2) étant pourvu d'un relief (4) destiné à former une butée à l'encontre du dispositif (1) de verrouillage, ledit dispositif (1) comportant :
- un premier demi-collier (5),
- un deuxième demi-collier (6), destiné à être associé au premier demi-collier (5) de manière à former un collier (5, 6) autour de ladite jonction (20), au moins une partie dudit collier (5, 6) ainsi formé venant en appui contre le relief (4); le premier et le deuxième demi-colliers (5, 6) comportant des moyens d'accrochage (10) mutuel automatique,
**caractérisé en ce que** les moyens d'accrochage (10) sont conformés et disposés de manière à permettre l'accrochage du deuxième demi-collier (6) sur le premier demi-collier (5) à l'arrière du relief (4), en déplaçant le deuxième demi-collier (6) de l'amont vers l'aval.

2. Dispositif selon la revendication 1 **caractérisé en ce que** les éléments de canalisation (2, 3) s'étendent suivant une direction longitudinale (Y-Y') et **en ce que** les moyens d'accrochage (10) forment une articulation, d'axe principal (W-W') sensiblement perpendiculaire à la direction longitudinale (Y-Y'), entre les demi-colliers (5, 6).

3. Dispositif selon la revendication 1 ou 2 **caractérisé en ce que** le premier et le deuxième demi-colliers (5, 6) sont formés chacun par une armature (7) comportant une demi-bride amont (9A) destinée à venir en appui contre le relief (4) et **en ce que** les moyens d'accrochage (10) sont positionnés à chacune des extrémités (9A₁, 9A₂) des demi-brides amont (9A).

4. Dispositif selon la revendication 1, 2 ou 3 **caractérisé en ce que** les moyens d'accrochage (10) comportent un crochet (12) qui s'ouvre vers l'amont ou vers l'aval.

5. Dispositif selon la revendication 4 **caractérisé en ce que** les moyens d'accrochage (10) sont formés par deux ergots (11), montés de part et d'autre de l'un des demi-colliers (5), et deux crochets (12) montés de part et d'autre du demi-collier (6) correspondant.

6. Dispositif selon la revendication 5 **caractérisé en ce que** ledit au moins un crochet (12) aune section longitudinale sensiblement en U.

7. Dispositif selon la revendication 2 **caractérisé en ce que** les moyens d'accrochage (10) sont conformés de manière à permettre un débattement angulaire du deuxième demi-collier (6) relativement au premier demi-collier (5) autour de l'axe principal (W-W').

8. Dispositif selon les revendications 5 et 7 **caractérisé en ce que** les ergots (11) ont une section transversale polygonale.

9. Dispositif selon la revendication 8 **caractérisé en ce que** ladite section transversale est délimitée par des contours (11A, 11B, 11C, 11D) agencés et dimensionnés relativement à la forme du crochet (12) de manière à permettre un débattement du deuxième demi-collier relativement au premier demi-collier.

10. Dispositif selon la revendication 9 **caractérisé en ce que** les contours (11A, 11B, 11C, 11D) forment un trapèze-rectangle.

11. Dispositif selon l'une quelconque des revendications précédentes **caractérisé en ce qu'**il comporte des moyens d'ancrage (15), agencés pour permettre l'ancrage du collier (5, 6) sur l'élément aval (3).

12. Dispositif selon la revendication 11 **caractérisé en ce qu'**il comporte des moyens de verrouillage (100), destinés à assurer le serrage des moyens d'ancrage (15) sur l'élément aval (3), verrouillant ainsi le raccordement.

13. Dispositif selon la revendication 12 **caractérisé en ce que** les moyens de verrouillage (100) comportent dés ouvertures (18) ménagées dans chacun des deux demi-colliers (5, 6) de telle sorte que les ouvertures (18) appareillées se positionnent automatiquement en regard l'une de l'autre lorsque les moyens d'accrochage (10) coopèrent ensemble.

14. Dispositif selon la revendication 13 **caractérisé en ce que** les moyens de verrouillage (100) comportent des boulons (17), agencés de manière à coopérer avec les ouvertures (18) afin d'assurer le serrage des moyens d'ancrage (15).

15. Dispositif selon la revendication 12 **caractérisé en ce que** les moyens de verrouillage (100) comportent:
- au moins un organe de guidage (110), monté à demeure sur le deuxième demi-collier (6),
- au moins un élément de réception (120), formé par une ouverture (170) disposée sur le premier demi-collier (5) et dans laquelle ledit organe de guidage (110) vient s'engager en position de fermeture du dispositif (1), ledit organe de guidage (110) présentant une forme sensiblement allongée pour d'une part former un moyen de repère facilitant le positionnement relatif des deux demi-colliers (5, 6) en vue de leur assemblage, lors de la mise en regard de l'organe de guidage (110) et de l'élément de réception (120), et d'autre part assurer, par coopération avec l'élément de réception (120), le guidage du deuxième demi-collier (6) vers sa position de fermeture relativement au premier demi-collier (5), l'ouverture (170) se présentant sous la forme d'une lumière de guidage et l'organe de guidage (110) étant apte à se déplacer suivant une direction (X-X') sensiblement parallèle à la direction longitudinale (Y-Y') au sein de la lumière de guidage pour assurer la fermeture.

16. Dispositif selon la revendication 15 **caractérisé en ce que** le moyen de guidage (110) est formé par une vis (130).

17. Dispositif selon la revendication 16 **caractérisé en ce que** la vis (130) est montée de manière fixe sur le deuxième demi-collier (6).

18. Dispositif selon la revendication 16 **caractérisé en ce que** la vis (130) est montée de façon mobile sur le deuxième demi-collier (6) à l'aide de moyens de maintien formés par :
- d'une part un filetage externe (150), ménagé sur au moins une partie de la longueur de la vis (130),
- d'autre part un trou taraudé (160), ménagé dans le deuxième demi-collier (6) et disposé sensiblement en regard de l'élément de réception (120) lorsque les deux demi-colliers (5, 6) sont en position de fermeture, ledit trou taraudé (160) assurant, par coopération avec le filetage externe (150) de la vis (130), le maintien en position de cette dernière.

19. Dispositif selon l'une des revendications 15 à 18 **caractérisé en ce que** l'ouverture (170) est formée par une encoche (230) qui s'ouvre vers l'amont ou vers l'aval.

20. Dispositif selon la revendication 18 **caractérisé en ce que** les moyens de verrouillage (100) comportent une paire d'ouvertures (170) aval, ménagées de part et d'autre du premier demi-collier (5), et une paire de trous taraudés (160) aval, ménagés de part et d'autre du deuxième demi-collier (6), de telle sorte que lors du positionnement des deux demi-colliers (5, 6) en regard l'un de l'autre en vue de la fermeture, la paire d'ouvertures (170) aval se trouve sensiblement en vis-à-vis de la paire de trous taraudés (160) aval, lesdits moyens de verrouillage (100) comportant également une paire de vis (130) aval, montées à demeure au sein de la paire de trous taraudés (160) aval, de manière à assurer le serrage des moyens d'ancrage (15) sur l'élément aval (3), verrouillant ainsi le raccordement.

21. Dispositif selon l'une des revendications 15 à 20 **caractérisé en ce qu'**il comporte des moyens d'immobilisation relative des deux demi-colliers (5, 6) suivant la direction longitudinale (Y-Y').

22. Dispositif selon la revendication 21 **caractérisé en ce que** les moyens d'immobilisation relative sont formés par un organe de blocage (31) disposé sur l'organe de guidage (110) et par un alésage (29) ménagé sur le pourtour de l'ouverture (170) et adapté pour recevoir et coopérer avec l'organe de blocage (31) lors du verrouillage, afin d'empêcher le déplacement relatif des deux demi-colliers (5, 6) suivant la direction longitudinale (Y-Y').

23. Dispositif selon la revendication 5 et la revendication 21 **caractérisé en ce que** les moyens d'immobilisation sont formés par un prolongement recourbé (280) du crochet (12), destiné à coopérer avec l'ergot (11) pour empêcher le déplacement relatif des deux demi-colliers (5, 6) suivant la direction longitudinale (Y-Y').

24. Procédé de mise en place d'un dispositif (1) de verrouillage pour le raccordement d'éléments de canalisation (2, 3) pourvu d'un premier et un deuxième demi-colliers (5, 6) comportant des moyens d'accrochage (10) mutuel automatique, dans lequel on positionne et on fait reposer le premier demi-collier (5) à la jonction (20) entre un élément de canalisation amont (2), pourvu d'un relief (4) destiné à former une butée à l'encontre du dispositif, et un élément de canalisation aval (3), de telle sorte qu'au moins une partie dudit premier demi-collier (5) vienne en appui contre le relief (4), ledit procédé étant **caractérisé en ce qu'**il comporte les étapes suivantes :
- présenter l'extrémité amont (6A) du deuxième demi-collier (6) sensiblement en amont du relief (4),
- positionner le deuxième demi-collier (6) en regard du premier demi-collier (5) à la jonction (20) en le déplaçant de l'amont vers l'aval tout en accrochant, par l'intermédiaire des moyens d'accrochage (10) mutuel automatique, le deuxième demi-collier (6) sur le premier demi-collier (5) à l'arrière du relief (4), de telle manière que le deuxième demi-collier (6) soit supporté par le premier demi-collier (5) et vienne naturellement sensiblement en regard de ce dernier.

25. Procédé selon la revendication 24 **caractérisé en ce qu'**on fait pivoter, par rotation autour des moyens d'accrochage (10), le deuxième demi-collier (6) relativement au premier demi-collier (5), le deuxième demi-collier (6) restant accroché sur le premier demi-collier (5), de manière à mettre en vis-à-vis les deux demi-colliers (5, 6) pour former un collier et assurer le verrouillage du dispositif (1) à l'aide de moyens de verrouillage (100).

26. Procédé selon la revendication 24 ou 25 **caractérisé en ce que** les éléments de canalisation (2, 3) s'étendent suivant une direction longitudinale (Y-Y') et **en ce que** le procédé comporte :
- une étape d'engagement, dans laquelle on engage un organe de guidage (110), monté sur le deuxième demi-collier (6) dans un élément de réception (120) correspondant, disposé sur le premier demi-collier (5),
- une étape de coulissement, dans laquelle on fait coulisser ledit organe de guidage (110) au sein de l'élément de réception (120) suivant une direction (X-X') sensiblement parallèle à la direction longitudinale (Y-Y').

27. Procédé selon la revendication 26 **caractérisé en ce que** l'élément de réception (120) étant formé par une encoche (230), le procédé comporte une étape où l'on introduit, en déplaçant le deuxième demi-collier (6) de l'amont vers l'aval, l'organe de guidage (110) au sein de ladite encoche (230), tout en accrochant, par l'intermédiaire des moyens d'accrochage (10), le deuxième demi-collier (6) sur le premier demi-collier (5).

28. Procédé selon l'une des revendications 24 à 27 **caractérisé en ce qu'**il comporte une étape de verrouillage, au cours de laquelle on verrouille, à l'aide de moyens d'actionnement (190), le deuxième demi-collier (6) avec le premier demi-collier (5) de manière à former un collier de verrouillage

29. Procédé selon la revendication 27 **caractérisé en ce qu'**il comporte une étape d'immobilisation relative des deux demi-colliers (5, 6) dans la direction longitudinale (Y-Y'), étape au cours de laquelle on vient loger un organe de blocage (31) disposé sur l'organe de guidage (110) au sein d'un alésage (29) ménagé sur le pourtour de l'encoche (230).

## Patentansprüche

1. Verriegelungsvorrichtung für den Anschluss von Kanalisationselementen (2, 3), für die Montage an eine Verbindung (20) zwischen einem vorgelagerten Kanalisationselement (2), nachstehend bezeichnet als vorgelagertes Element (2), und einem nachgelagerten Kanalisationselement (3), nachstehend bezeichnet als nachgelagertes Element (3), wobei das vorgelagerte Element (2) mit einem Relief (4) ausgestattet ist, das einen Anschlag zur Verriegelungsvorrichtung (1) bilden soll, wobei die besagte Vorrichtung (1) Folgendes umfasst:
- eine erste Rohrschellenhälfte (5),
- eine zweite Rohrschellenhälfte (6), die mit der ersten Rohrschellenhälfte (5) verbunden werden soll, um eine Rohrschelle (5, 6) um die besagte Verbindung (20) zu bilden, wobei mindestens ein Teil der besagten so gebildeten Rohrschelle (5, 6) das Relief (4) stützt und die erste und zweite Rohrschellenhälfte (5, 6) Mittel zur automatischen gegenseitigen Befestigung (10) enthalten,
**dadurch gekennzeichnet, dass** die Befestigungsmittel (10) angepasst und so angebracht wurden, dass die Befestigung der zweiten Rohrschellenhälfte (6) an der ersten Rohrschellenhälfte (5) an der Rückseite des Reliefs (4) ermöglicht wird, indem die zwei Rohrschellenhälfte (6) von vorne nach hinten versetzt wird.

2. Vorrichtung im Sinne von Anspruch 1, **dadurch gekennzeichnet, dass** die Kanalisationselemente (2, 3) sich in einer Längsrichtung (Y-Y') erstrecken und dass die Befestigungsmittel (10) zwischen den Rohrschellenhälften (5, 6) ein Gelenk mit einer Hauptachse (W-W') bilden, die im Verhältnis zur Längsrichtung (Y-Y') im Wesentlichen senkrechten verläuft.

3. Vorrichtung im Sinne der Ansprüche 1 und 2, **dadurch gekennzeichnet, dass** die erste und zweite Rohrschellenhälfte (5, 6) jeweils durch eine Armatur (7) gebildet werden,
die eine vorgelagerte Flanschhälfte (9A) enthält, die das Relief (4) stützen soll, und dass die Befestigungsmittel (10) an den Extremitäten (9A₁, 9A₂) der vorgelagerten Flanschhälften (9A) positioniert sind.

4. Vorrichtung im Sinne der Ansprüche 1, 2 und 3, **dadurch gekennzeichnet, dass** die Befestigungsmittel (10) einen Haken (12) enthalten, der sich zur vor- oder nachgelagerten Position hin öffnet.

5. Vorrichtung im Sinne von Anspruch 4, **dadurch gekennzeichnet, dass** die Befestigungsmittel (10) durch zwei Dorne (11) gebildet werden, die beiderseits einer der Rohrschellenhälften (5) montiert werden, sowie durch zwei Haken (12), die beiderseits der entsprechend anderen Rohrschellenhälfte (6) montiert werden.

6. Vorrichtung im Sinne von Anspruch 5, **dadurch gekennzeichnet, dass** mindestens einer der besagten Haken (12) einen Längsabschnitt aufweist, der im Wesentlichen eine U-Form bildet.

7. Vorrichtung im Sinne von Anspruch 2, **dadurch gekennzeichnet, dass** die Befestigungsmittel (10) so angepasst wurden, dass ein winkelförmiger Schwenkbereich der zweiten Rohrschellenhälfte (6) im Verhältnis zur ersten Rohrschellenhälfte (5) um die Hauptachse (W-W') ermöglicht wird.

8. Vorrichtung im Sinne der Ansprüche 5 und 7, **dadurch gekennzeichnet, dass** die Dorne (11) einen polygonalen Querschnitt aufweisen.

9. Vorrichtung im Sinne von Anspruch 8, **dadurch gekennzeichnet, dass** der besagte Querschnitt von den Konturen (11A, 11B, 11C, 11D) beschränkt wird, die im Verhältnis zur Form des Hakens (12) angeordnet und dimensioniert sind, um einen Schwenkbereich der zweiten Rohrschelle im Verhältnis zur ersten Rohrschelle zu ermöglichen.

10. Vorrichtung im Sinne von Anspruch 9, **dadurch gekennzeichnet, dass** die Konturen (11A, 11B, 11C, 11D) ein Trapez-Rechteck bilden.

11. Vorrichtung im Sinne eines beliebigen vorangegangenen Anspruchs, **dadurch gekennzeichnet, dass** sie Verankerungsmittel (15) enthält, die so angeordnet sich, dass die Verankerung der Rohrschelle (5, 6) am nachgelagerten Element (3) ermöglicht wird.

12. Vorrichtung im Sinne von Anspruch 11, **dadurch gekennzeichnet, dass** sie Verriegelungsmittel (100) enthält, die dafür bestimmt sind, die Einspannung der Verankerungsmittel (15) am nachgelagerten Element (3) zu sichern und so den Anschluss zu verriegeln.

13. Vorrichtung im Sinne von Anspruch 12, **dadurch gekennzeichnet, dass** die Verriegelungsmittel (100) Öffnungen (18) in jeder der beiden Rohrschellenhälften (5, 6) enthalten, sodass die passend zusammengestellten Öffnungen (18) sich automatisch zueinander ausrichten, wenn die Befestigungsmittel (10) zusammenwirken.

14. Vorrichtung im Sinne von Anspruch 13, **dadurch gekennzeichnet, dass** die Verriegelungsmittel (100) Bolzen (17) enthalten, die so angeordnet sind, dass sie mit den Öffnungen (18) zusammenwirken, um die Verriegelung der Verankerungsmittel (15) zu gewährleisten.

15. Vorrichtung im Sinne von Anspruch 12, **dadurch gekennzeichnet, dass** die Verriegelungsmittel (100) Folgendes enthalten:
- mindestens ein Führungsorgan (110), das dauerhaft an der zweiten Rohrschellenhälfte (6) montiert ist,
- mindestens ein Aufnahmeelement (120), das durch eine Öffnung (170) gebildet wird, die sich an der ersten Rohrschellenhälfte (5) befindet und in der besagtes Führungsorgan (110) in die Schließstellung
der Vorrichtung (1) eingreift, wobei das besagte Führungsorgan (110) eine im Wesentlichen längliche Form aufweist, um einerseits ein Orientierungshilfsmittel zu bilden, das die Positionierung zu den beiden Rohschellenhälften (5, 6) für ihren Zusammenbau während der Gegenüberstellung des Führungsorgans (110) und des Aufnahmeelements (120) erleichtert, und andererseits durch das Zusammenspiel mit dem Aufnahmeelement (120) die Führung der zweiten Rohrschellenhälfte (6) zu ihrer Schließposition im Verhältnis zur ersten Rohrschellenhälfte (5) zu sichern, wobei die Öffnung (170) in Form eines Führungslichts erscheint und das Führungsorgan (110) dazu in der Lage ist, sich von einer im Wesentlichen parallelen Richtung (X-X') in eine Längsrichtung (Y-Y') innerhalb des Führungslichts zu bewegen, um die Schließung zu gewährleisten.

16. Vorrichtung im Sinne von Anspruch 15, **dadurch gekennzeichnet, dass** das Führungsmittel (110) durch eine Schraube (130) gebildet wird.

17. Vorrichtung im Sinne von Anspruch 16, **dadurch gekennzeichnet, dass** die Schraube (130) fest an die zweite Rohrschellenhälfte (6) montiert wird.

18. Vorrichtung im Sinne von Anspruch 16, **dadurch gekennzeichnet, dass** die Schraube (130) mobil an die zweite Rohrschellenhälfte (6) montiert wird, und zwar mit Hilfe von Halteelementen, die gebildet werden durch:
- einerseits ein externes Gewinde (150), das an mindestens einem Abschnitt auf der Länge der Schraube (130) freigelegt wird,
- andererseits eine Gewindebohrung (160), die an der zweiten Rohrschellenhälfte (6) freigelegt wird und im Wesentlichen gegenüber vom Aufnahmeelement (120) angebracht wird, wenn die beiden Rohrschellenhälften (5, 6) sich in geschlossener Position befinden, wobei die Gewindebohrung (160) durch das Zusammenwirken mit dem externen Gewinde (150) der Schraube (130) gewährleistet, dass letztere in ihrer Position gehalten wird.

19. Vorrichtung im Sinne von einem der Ansprüche 15 bis 18, **dadurch gekennzeichnet, dass** die Öffnung (170) durch eine Einkerbung (230) gebildet wird, die sich nach vorne oder nach hinten öffnet.

20. Vorrichtung im Sinne von Anspruch 18, **dadurch gekennzeichnet, dass** die Verriegelungsmittel (100) ein nachgelagertes Öffnungspaar (170) enthalten, das beidseitig der ersten Rohrschellenhälfte (5) freigelegt ist, sowie ein nachgelagertes Gewindebohrungspaar (160), das beidseitig der zweiten Rohrschellenhälfte (6) freigelegt ist, sodass sich das nachgelagerte Öffnungspaar (170) bei der Positionierung der beiden Rohrschellenhälften (5, 6) zu beiden Seiten des Verschlusses etwa gegenüber des nachgelagerten Gewindebohrungspaars (160) befindet, wobei die oben genannten Verriegelungsmittel (100) ebenfalls ein nachgelagertes Schraubenpaar (130) enthalten, das dauerhaft innerhalb des nachgelagerten Gewindebohrungspaars (160) montiert ist, um die Einspannung der Verankerungsmittel (15) am nachgelagerten Element (3) zu sichern und so den Anschluss zu verriegeln.

21. Vorrichtung im Sinne der Ansprüche 15 bis 20, **dadurch gekennzeichnet, dass** sie Mittel zur relativen Fixierung der beiden Rohrschellenhälften (5, 6) in Längsrichtung (Y-Y') enthalten.

22. Vorrichtung im Sinne von Anspruch 21, **dadurch gekennzeichnet, dass** die Mittel zur relativen Fixierung durch ein Blockierungsorgan (31) gebildet werden, das am Führungsorgan (110) angebracht wird, sowie durch eine Bohrung (29), die an der Umrandung der Öffnung (170) freigelegt wird und angepasst ist, um bei der Verriegelung ein Blockierungsorgan (31) aufzunehmen und mit ihm zusammenzuwirken, um die relative Versetzung der beiden Rohrschellenhälften (5, 6) in Längsrichtung (Y-Y') zu verhindern.

23. Vorrichtung im Sinne von Anspruch 5 und Anspruch 21, **dadurch gekennzeichnet, dass** die Mittel zu Fixierung durch eine gebogene Verlängerung (280) des Hakens (12) gebildet werden, die mit dem Dorn (11) zusammenwirken soll, um die relative Versetzung der beiden Rohrschellenhälften (5, 6) in Längsrichtung (Y-Y') zu verhindern.

24. Verfahren zur Einrichtung einer Verriegelungsvorrichtung (1) für den Anschluss von Kanalisationselementen (2, 3), die mit einer ersten und zweiten Rohrschellenhälfte (5, 6) ausgestattet ist, die Mittel zur automatischen gegenseitigen Befestigung (10) enthält, in der die erste Rohrschellenhälfte (5) an der Verbindung (20) zwischen einem vorgelagerten Kanalisationselement (2), das mit einem Relief (4) ausgestattet, das einen Anschlag gegen die Vorrichtung bilden soll, und einem nachgelagerten Kanalisationselement (3) eingesetzt und eingelassen wird, sodass mindestens ein Teil der oben genannten ersten Rohrschellenhälfte (5) das Relief (4) abstützt, wobei das besagte Verfahren **dadurch gekennzeichnet ist, dass** es folgende Schritte enthält:
- die vorgelagerte Extremität (6A) der zweiten Rohrschellenhälfte (6) wird deutlich vor dem Relief (4) präsentiert,
- die zweite Rohrschellenhälfte (6) wird in Richtung der ersten Rohrschellenhälfte (5) an der Verbindung (20) positioniert, indem sie von vorne nach hinten versetzt wird, wobei gleichzeitig mit Hilfe von automatischen, gegenseitigen Befestigungsmitteln (10) die zweite Rohrschellenhälfte (6) an der ersten Rohrschellenhälfte (5) hinter dem Relief (4) befestigt wird, sodass die zweite Rohrschellenhälfte (6) von der ersten Rohrschellenhälfte (5) getragen wird und sich auf natürliche Weise zur letztgenannten hinbewegt.

25. Verfahren im Sinne von Anspruch 24, **dadurch gekennzeichnet, dass** die zweite Rohrschellenhälfte (6) durch eine Rotation um die Befestigungsmittel (10) um die erste Rohrschellenhälfte (5) gedreht wird, wobei die zweite Rohrschellenhälfte (6) an der ersten Rohrschellenhälfte (5) befestigt bleibt, sodass die beiden Rohrschellenhälften (5, 6) einander gegenübergestellt werden, um eine Rohrschelle zu bilden und die Verriegelung der Vorrichtung (1) mit Hilfe von Verriegelungsmitteln (100) zu sichern.

26. Verfahren im Sinne von Anspruch 24 oder 25, **dadurch gekennzeichnet, dass** die Kanalisationselemente sich in einer Längsrichtung (Y-Y') erstrecken und dass das Verfahren Folgendes umfasst:
- einen Einsatzschritt, in dem ein Führungsorgan (110), das an der zweiten Rohrschellenhälfte (6) montiert ist, in ein entsprechendes Aufnahmeelement (120) eingesetzt wird, das an der ersten Rohrschellenhälfte (5) angebracht wird,
- einen Gleitschritt, in dem das besagte Führungsorgan (110) innerhalb des Aufnahmeelements (120) von einer im Wesentlichen parallelen Richtung (X-X') in die Längsrichtung (Y-Y') verschoben wird.

27. Verfahren im Sinne von Anspruch 26, **dadurch gekennzeichnet, dass** das Aufnahmeelement (120) durch eine Einkerbung (230) gebildet wird, das Verfahren einen Schritt enthält, in dem das Führungsorgan (110) durch die Versetzung der zweiten Rohrschellenhälfte (6) von vorne nach hinten in die besagte Einkerbung (230) eingesetzt wird, wobei gleichzeitig mit Hilfe von Befestigungsmittel (10) die zweite Rohrschellenhälfte (6) an der ersten Rohrschellenhälfte (5) befestigt wird.

28. Verfahren im Sinne von einem der Ansprüche 24 bis 27, **dadurch gekennzeichnet, dass** es einen Verriegelungsschritt enthält, bei dem die zweite Rohrschellenhälfte (6) mit Hilfe von Betätigungseinrichtungen (190) mit der ersten Rohrschellenhälfte (5) verriegelt wird, sodass eine Verriegelungsrohrschelle gebildet wird.

29. Verfahren im Sinne von Anspruch 27, **dadurch gekennzeichnet, dass** es einen Immobilisierungsschritt im Hinblick auf die beiden Rohrschellenhälften (5, 6) in der Längsrichtung (Y-Y') beinhaltet, in dem ein Blockierungsorgan (31), das auf einem Führungsorgan (110) angebracht ist, in eine Bohrung (29) an der Umrandung der Einkerbung (230) eingebracht wird.

## Claims

1. A locking device for connecting pipe elements (2, 3), intended to be mounted at the junction (20) between an upstream pipe member (2), so-called upstream element (2), and a downstream pipe member (3), so-called downstream element (3), the upstream element (2) being provided with a relief (4) for forming an abutment against the locking device (1), said device (1) comprising:
- a first half-collar (5),
- a second half-collar (6), intended to be associated with the first half-collar (5) so as to form a collar (5, 6) around said junction (20), at least a portion of said collar (5, 6) thus formed abutting against the relief (4), the first and second half-collars (5, 6) having automatic mutual coupling means (10),
**characterized in that** the coupling means (10) are shaped and arranged so as to allow coupling of the second half-collar (6) on the first half-collar (5) to the rear of the relief (4), by moving the second half-collar (6) from upstream to downstream.

2. The device according to claim 1, **characterized in that** the pipe elements (2, 3) extend in a longitudinal direction (Y-Y') and **in that** the coupling means (10) form a hinge, along a principal axis (W-W') substantially perpendicular to the longitudinal direction (Y-Y'), between the half-collars (5, 6).

3. The device according to claim 1 or 2, **characterized in that** the first and second half-collars (5, 6) are each formed by a frame (7) having an upstream half-flange (9A) adapted to bear against the relief (4) and **in that** the coupling means (10) are positioned at each end (9A₁, 9A₂) of the upstream half-flanges (9A).

4. The device according to claim 1, 2 or 3, **characterized in that** the coupling means (10) comprise a hook (12) which opens upstream or downstream.

5. The device according to claim 4, **characterized in that** the coupling means (10) are formed by two snugs (11), mounted on either side of one of the half-collar (5), and two hooks (12) mounted on either side of the corresponding half-collar (6).

6. The device according to claim 5, **characterized in that** said at least one hook (12) has a substantially U-shaped longitudinal section.

7. The device according to claim 2, **characterized in that** the coupling means (10) are shaped so as to allow an angular displacement of the second half-collar (6) relative to the first half-collar (5) about the principal axis W-W').

8. The device according to claims 5 and 7, **characterized in that** the snugs (11) have a polygonal cross-section.

9. The device according to claim 8, **characterized in that** said cross-section is delimited by contours (11A, 11B, 11C, 11D) arranged and dimensioned relative to the shape of the hook (12) so as to allow a displacement of the second half-collar relative to the first half-collar.

10. The device according to claim 9, **characterized in that** the contours (11 A, 11 B, 11C, 11 D) form a rectangle trapeze.

11. The device according to any preceding claim, **characterized in that** it comprises anchoring means (15) arranged so as to allow the anchoring of the collar (5, 6) on the downstream element (3).

12. The device according to claim 11, **characterized in that** it comprises locking means (100) intended to clamp the anchoring means (15) on the downstream element (3), thus locking the connection.

13. The device according to claim 12, **characterized in that** the locking means (100) comprise openings (18) formed in each of the two half-collars (5, 6), such that the paired openings (18) are automatically positioned opposite to each other while the coupling means (10) are cooperating together.

14. The device according to claim 13, **characterized in that** the locking means (100) comprise bolts (17) arranged so as to cooperate with the openings (18) for clamping of the anchoring means (15).

15. The device according to claim 12, **characterized in that** the locking means (100) comprises:
- at least one guiding member (110), fixedly mounted on the second half-collar (6),
- at least one receiving element (120), formed by an opening (170) disposed on the first half-collar (5) and into which said guiding member (110) engages itself when the device (1) is in the closed position, said guiding member (110) having a substantially elongated shape so as to, on the one hand, form an indicating means to facilitate the relative positioning of the two half-collars (5, 6) for their assembly, when the guiding member (110) and the receiving member (120) are placed facing in each other, and, on the other hand, to guide by cooperation with the receiving element (120) the second half-collar (6) towards its closed position relative to the first half-collar (5), the opening (170) being in the form of a guiding hole and the guiding member (110) being adapted to move in the a guiding hole in a direction (X - X') substantially parallel to the longitudinal direction (Y-Y') for closing.

16. The device according to claim 15, **characterized in that** the guiding means (110) is formed by a screw (130).

17. The device according to claim 16, **characterized in that** the screw (130) is fixedly mounted on the second half-collar (6).

18. The device according to claim 16, **characterized in that** the screw (130) is movably mounted on the second half-collar (6) with holding means formed by:
- on the one hand, an external thread (150) formed on at least one portion of the length of the screw (130),
- on the other hand, a tapped hole (160) formed in the second half-collar (6) and arranged substantially opposite the receiving member (120) when the two half-collars (5, 6) are in the closed position, said threaded hole (160) holding the latter in position, by cooperation with the external thread (150) of the screw (130).

19. The device according to one of claims 15 to 18, **characterized in that** the opening (170) is formed by a notch (230) which opens upstream or downstream.

20. The device according to claim 18, **characterized in that** the locking means (100) comprise a downstream pair of openings (170), formed on either side of the first half-collar (5), and a downstream pair of threaded holes (160), formed on either side of the second half-collar (6), such that, upon the positioning of the two half-collars (5, 6) facing one another in view of the closure, the downstream pair of openings (170) is substantially located opposite the downstream pair of threaded holes (160), said locking means (100) also having a downstream pair of screws (130) permanently mounted within the downstream pair of threaded holes (160), so as to clamp the anchoring means (15) on the downstream element (3), thus locking the connection.

21. The device according to one of claims 15 to 20, **characterized in that** it comprises means for relatively immobilizing the two half-collars (5, 6) in the longitudinal direction (Y-Y').

22. The device according to claim 21, **characterized in that** the immobilizing means are formed by a blocking member (31) disposed on the guiding member (110) and a bore (29) formed on the periphery of the opening (170) and adapted to receive and cooperate with the blocking member (31) upon the locking, so as to prevent relative movement of the two half-collars (5, 6) in the longitudinal direction (Y-Y').

23. The device according to claim 5 and claim 21, **characterized in that** the immobilizing means are formed by a curved extension (280) of the hook (12) intended to cooperate with the snug (11) so as to prevent relative movement of the two half-collars (5, 6) in the longitudinal direction (Y-Y').

24. A process of setting up for a locking device (1) for the connection of pipe elements (2, 3) provided with a first and a second half-collars (5, 6) having automatic mutual coupling means (10), wherein a first half-collar (5) is positioned and rested at the junction (20) between an upstream pipe member (2), provided with a relief (4) intended to form an abutment against the device, and a downstream pipe member (3), such that at least one portion of said first half-collar (5) abuts against the relief (4), said method being **characterized in that** it comprises the following steps:
- presenting the upstream end (6A) of the second half-collar (6) substantially upstream from the relief (4),
- positioning the second half-collar (6) facing the first half-collar (5) at the junction (20) by moving it from upstream to downstream while attaching the second half-collar (6) on the first half-collar (5) to the rear of the relief (4), by the intermediate of the automatic mutual coupling means (10), such that the second half-collar (6) is supported by the first half-collar (5) and is naturally substantially facing the latter.

25. A process according to claim 24, **characterized in that** the second half-collar (6) is pivoted relative to the first half-collar (5) by rotation around the coupling means (10), the second half-collar (6) remaining attached to the first half-collar (5), so as to put face to face the two half-collars (5, 6) for forming a collar and locking the device (1) thanks to the locking means (100).

26. A process according to claim 24 or 25, **characterized in that** the pipe elements (2, 3) extend in a longitudinal direction (Y-Y') and **in that** the method comprises:
- a step of engagement, during which a guiding member (110) mounted on the second half-collar (6) is engaged in a corresponding receiving element (120) disposed on the first half-collar (5),
- a step of sliding, during which said guiding member (110) slides within the receiving member (120) in a direction (X-X') substantially parallel to the longitudinal direction (Y-Y').

27. A process according to claim 26, **characterized in that** the receiving member (120) being formed by a notch (230), the method comprises a step during which the guiding member (110) is introduced within said notch (230) by moving the second half-collar (6) from upstream to downstream, while the second half-collar (6) is attached on the first half-collar (5) by the intermediate of the coupling means (10).

28. A process according to one of claims 24 to 27, **characterized in that** it comprises a step of locking, during which step the second half-collar (6) is locked, by means of actuating means (190), with the first half-collar (5) so as to form a locking collar.

29. A process according to claim 27, **characterized in that** it comprises a step of relative immobilization of the two half-collars (5, 6) in the longitudinal direction (Y-Y'), during which step a blocking member (31) disposed on the guiding member (110) is housed within a bore (29) formed on the periphery of the notch (230).
